Europäisches Patentamt

European Patent Office

Office européen des brevets

(11) Veröffentlichungsnummer: **0 031 158**
**B1**

(12) **EUROPÄISCHE PATENTSCHRIFT**

(45) Veröffentlichungstag der Patentschrift: **28.11.84**

(21) Anmeldenummer: **80108059.9**

(22) Anmeldetag: **19.12.80**

(51) Int. Cl.³: **A 01 D 35/26, A 01 D 53/00**

(54) **Rasenmäher.**

(30) Priorität: **24.12.79 DE 2952397**
**13.12.80 DE 3047058**

(43) Veröffentlichungstag der Anmeldung:
**01.07.81 Patentblatt 81/26**

(45) Bekanntmachung des Hinweises auf die
Patenterteilung:
**28.11.84 Patentblatt 84/48**

(84) Benannte Vertragsstaaten:
**AT BE CH DE FR GB IT LI LU NL SE**

(56) Entgegenhaltungen:
**DE-A-1 947 750**
**DE-A-2 624 983**
**DE-U-7 821 325**
**US-A-2 777 271**
**US-A-2 882 668**
**US-A-3 037 339**

(73) Patentinhaber: **GUTBROD-WERKE GMBH**
**D-6601 Bübingen (Saar) (DE)**

(72) Erfinder: **Klever, Manfred, Dipl.-Ing.**
**Scheidter Strasse 40**
**D-6601 Saarbrücken-Scheidterberg (DE)**
Erfinder: **Rott, Karl-Heinz**
**Waldstrasse 17**
**D-6601 Saarbrücken-Bübingen (DE)**

(74) Vertreter: **Schönwald, Karl, Dr.-Ing. et al**
**Deichmannhaus**
**D-5000 Köln 1 (DE)**

Courier Press, Leamington Spa, England.

## Beschreibung

Die Erfindung betrifft einen Rasenmäher mit einem Gehäuse, einem Antriebsmotor, einer von dem Antriebsmotor, angetriebenen, mit Windflügeln o.dgl. versehenen Schneidvorrichtung, einem zu einer Gehäuse-Auslaßöffnung führenden Auswurfkanal für das abgeschnittene Mähgut und einem an dem Auswurfkanal angeschlossenen Gebläserad.

Bei einem bekannten Rasenmäher dieser Art (US—A—2 882 668) weisen die rotierenden Messer Windflügel auf, die in dem nach unten offenen Gehäuse einen rotierenden, nach oben gerichteten Luftstrom erzeugen, durch den das abgeschnittene Mähgut in einen sich an das Gehäuse anschließenden Auswurfkanal geleitet wird. An den Auswurfkanal kann eine Auffangvorrichtung zur Aufnahme des Mähgutes angeschlossen werden. Der bekannte Rasenmäher weist oberhalb des die Messer tragenden Raumes ein Gebläse auf, in dessen Gebläsekammer das Mähgut durch eine Öffnung hindurch befördert wird. Das Gebläse, das ein angetriebenes Gebläserad enthält, ist an den Anfangsbereich des Auswurfkanals angeschlossen, also an denjenigen Bereich des Auswurfkanals, der dessen Einlaßöffnung benachbart ist. Die beiden Luftströme, nämlich der Luftstrom der Windflügel und der Luftstrom des Gebläserades vermischen sich am Anfang des Auswurfkanals und expandieren gemeinsam in den Auswurfkanal hinein.

Der bekannte Rasenmäher der oben genannten Art, sowie auch alle anderen bekannten Rasenmäher, die mit einer Auffangvorrichtung für das Mähgut versehen sind, haben den Nachteil, daß die Auffangvorrichtung häufig entleert werden muß und eine relativ geringe Aufnahmekapazität hat. Dies ist darauf zurückzuführen, daß der Grasfangkorb mit verhältnismäßig lockerem Mähgut, d.h. mit geringer Pressung, gefüllt wird, wodurch sein Volumen sich verhältnismäßig schnell auffüllt. Der Grasfangkorb muß daher oft gewechselt werden, was zusätzliche Arbeit und Zeit erfordert. Häufig bilden sich im Bereich der Eingangsöffnung zum Grasfangkorb Mähgutbüschel aus, die infolge des nachdrängenden Mähgutes zu schwerfälligen Klumpen anwachsen und hängen bleiben, so daß eine vollständige Füllung des Grasfangkorbes nicht möglich ist.

Aufgabe der Erfindung ist es, einen Rasenmäher der eingangs genannten Art zu schaffen, bei dem das Mähgut mit größerer Kraft aus dem Auswurfkanal in die Auffangvorrichtung getrieben wird, so daß sich in der Auffangvorrichtung eine dichtere Packung des Mähgutes zur Erhöhung der Aufnahmekapazität ergibt.

Zur Lösung dieser Aufgabe ist erfindungsgemäß vorgesehen, daß das Gebläserad in einem zu dem die Schneidvorrichtung enthaltenden Raum abgeschlossenen besonderen Gebläsegehäuse angeordnet ist, und daß von diesem Gebläsegehäuse ein gesonderter Luftführungskanal abgeht, der nahe der Gehäuse-Auslaßöffnung in den Auswurfkanal für das Mähgut mündet.

Durch die Einwirkung der gesonderten Luftströmung am Ende des Auswurfkanals wird erreicht, daß der Hauptluftstrom an einer Stelle, an der er bereits an Energie verloren hat, von neuem beschleunigt wird. Diese Beschleunigung erfolgt kurz vor dem Eintreten des Mähgutes in den Fangkorb. Auf diese Weise wird verhindert, daß sich am Auslaß des Auswurfkanals oder am Einlaß des Fangkorbes Stauungen oder Verstopfungen bilden. Da das Mähgut mit hoher Geschwindigkeit in den Fangkorb eingetrieben wird, entsteht eine verdichtete und konzentrierte Ablage des Mähgutes in dem Fangkorb.

Der zusätzlich Luftstrom wird von dem Gebläserad erzeugt, das in einem Gehäuse gekapselt untergebracht ist. Dieses zusätzliche Gebläserad saugt Frischluft an, so daß der Fangkorb nicht mit Motorabgasen und Verbrennungsrückständen verunreinigt wird. Die das Gebläserad enthaltende Einheit kann an beliebiger Stelle des Rasenmähergehäuses angeordnet werden, wobei lediglich dafür zu sorgen ist, daß der durch das Gebläserad erzeugte zweite Luftstrom kurz vor der Gehäuseauslaßöffnung des Auswurfskanals in diesen eingeleitet wird. Der gesonderte Luftführungskanal kann innerhalb des Rasenmähergehäuses angeordnet sein, vorzugsweise ist er jedoch außerhalb Rasenmähergehäuses vorgesehen.

Ein weiteres Merkmal der Erfindung besteht darin, daß der gesonderte Luftführungskanal am Eintritt in den Auswurfkanal zur Beschleunigung des Luftstromes, d.h. zur Erzielung einer höheren Geschwindigkeit, düsenförmig verengt ausgebildet sein kann, z.B. nach Art eines Venturirohres. Vorteilhaft ist eine Breitschlitzdüse vorgesehen, wobei Breite und Höhe der Breitschlitzdüse ein Verhältnis von 5 bis 15 zu 1 haben können. Das Eintrittsende des gesonderten Luftführungskanals kann parallel zum Auswurfkanal verlaufen. Bevorzugt mündet das Eintrittsende im Schrägwinkel in den Auswurfkanal. Der Abstand der Düsenöffnung des gesonderten Luftführungskanals von dem Austrittsende des Auswurfkanals kann bis zu etwa ein Drittel der Länge des Auswurfkanals betragen. Als Gebläserad dient vorteilhaft ein Radialgebläse.

Durch den stetig in der Höhe ansteigenden Auswurfkanal ergibt sich eine verhältnismäßig hohe Auslaßöffnung an dem Gehäuse. Es hat sich gezeigt, daß das Schnittgut überwiegend im oberen Bereich der Auslaßöffnung austritt. Vorteilhaft soll der gesonderte Luftführungskanal im oberen Drittel bis Viertel der Höhe der Gehäuse-Auslaßöffnung in den Auswurfkanal münden. Dadurch ergibt sich, daß die Zuführung des zweiten Luftstroms in die Zone der höchsten Schnittgutkonzentration geleitet wird, was zur Verbesserung des Füllungsgrades des Fangkorbes beiträgt.

Bei Rasenmähern mit einer einen Luftstrom durch aufgesetzte Flügel erzeugenden Schneidvorrichtung ist es möglich, daß bei extremen Schnitt-Tiefen die von der Schneidvorrichtung angesaugte Luft zwischen der Unterkante des Mähergehäuses und der Oberfläche der zu mähenden Fläche nicht genügend eintreten kann, da eine Ansaugmöglichkeit für die Luft von oben nicht vorhanden ist. Es kann bei sehr niedriger Schnitthöheneinstellung und dichtem Rasen in dem die Schneidvorrichtung aufnehmenden Gehäuse ein Unterdruck entstehen, was sich nachteilig auf die Art der Abnahme des Schnittgutes auswirken kann. Die Erfindung sieht hierbei zur Behebung dieses Umstandes vor, in der Wandung des Gehäuses für den die Schneidvorrichtung enthaltenden Raum automatisch sich öffnende Rückschlagventile vorzusehen. Dadurch kann bei entstehendem Unterdruck im Rasenmähergehäuse zusätzlich Luft zu der Schneidvorrichtung eintreten, wodurch der Unterdruck aufgehoben wird. Die Rückschlagventile sind zweckmäßig als Lippenventile ausgebildet. Bei normaler oder hoher Schnitthöheneinstellung verschließen sich die Ventile selbsttätig, so daß im Regelfall der Vorteil der Luftansaugung von unten erhalten bleibt.

Die Erfindung wird anhand der in der Zeichnung dargestellten Ausführungsbeispiele nachstehend näher erläutert.

Fig. 1 zeigt einen Vertikalschnitt durch einen Sichelrasenmäher entlang der Linie II—II der Fig. 2,

Fig. 2 zeigt eine Draufsicht des Sichelrasenmähers,

Fig. 3 stellt einen Querschnitt nach der Linie III—III der Fig. 2 dar,

Fig. 4 veranschaulicht eine Draufsicht auf eine weitere Ausführungsform des Rasenmähers gemäß der Erfindung, bei dem der gesonderte Luftführungskanal von dem Gehäuse des Gebläserades zu der Eintrittsstelle des zweiten Luftstromes nahe der Auslaßöffnung des Auswurfkanals außerhalb des Rasenmähergehäuses angeordnet ist, und

Fig. 5 zeigt die Anordnung eines selbsttätigen Rückschlagventils in Form eines Lippenventils in der Gehäusewand im Ausschnitt und im Schema.

Der Rasenmäher 1 weist ein Gehäuse 2 als Schutzgehäuse, einen Antrieb 3, der ein Verbrennungsmotor oder ein Elektromotor sein kann, eine Schneidvorrichtung 4, z.B. in der Form eines mit Windflügeln 5 versehenen Sichelmessers 4, und ein Gebläserad 6 auf, wobei die Schneidvorrichtung 4 und das Gebläserad 6 auf der angetriebenen Welle 3a der Schneidvorrichtung 4 angeordnet sind. Das Schutzgehäuse 2 umschließt die Schneidvorrichtung von oben und von allen Seiten und den die Schneidvorrichtung enthaltenden Raum 7. In dem Schutzgehäuse 2 ist mittels einer Zwischenwand 8 ein Auswurfkanal 9 für das Schnittgut ausgebildet. Nach unten ist das Schutzgehäuse 2 offen, so daß die während de Rotation der Schneidvorrichtung bewegte Luftmasse durch einen nicht sichtbaren Spalt zwischen dem Erdboden und dem unteren Rand des Schutzgehäuses 2 angesaugt wird, und zwar in dem Maße, in dem sie aus dem Schutzgehäuse 2 durch die Auslaßöffnung 10 mit dem Schnittgut austritt. Der durch die Windflügel 5 an der Schneidvorrichtung 4 im Gehäuse 2 erzeugte Luftstrom, der als erster Luftstrom bezeichnet wird, fördert die Mähgutabschnitte durch den Auswurfkanal 9 mindestens bis zu der Austragsöffnung 10, die zugleich die Eintrittsöffnung eines (nicht dargestellten) Mähgut-Fangkorbes ist, wobei dieser Fangkorb an die Ansätze 11 und 12 des Schutzgehäuses 2 angeschlossen werden kann.

Das Gebläserad 6 ist in einem besonderen Gebläsegehäuse 14 untergebracht, der nach oben offen ist, so daß Luft aus der Umgebung von oben angesaugt werden kann. Zu dem die Schneidvorrichtung 4 mit dem Auswurfkanal 9 enthaltenden Raum ist das Gehäuse 14 geschlossen. Das Gebläserad 6, das vorteilhaft als Radialgebläse arbeitet, fördert die von oben angesaugte Umgebungsluft durch einen gesonderten Luftführungskanal 15 zu der Auslaßöffnung 10 des Auswurfkanals 9. Das austrittsende des gesonderten Luftführungskanals 15 mündet nahe der Gehäuseauslaßöffnung 10 in den Auswurfkanal 9. Durch das Gebläserad 6 wird ein zweiter, von dem ersten Luftstrom getrennt gehaltener Luftstrom erzeugt, der erst kurz vor der Auslaßöffnung 10 dem ersten Luftstrom zugeleitet wird.

Das Endstück 16 des gesonderten Luftführungskanals 15 ist zweckmäßig verengt ausgebildet, um die Austrittsgeschwindigkeit des Luftstroms zu erhöhen. Die Verengung ist zweckmäßig düsenförmig ausgebildet, z.B. in Form eines Venturirohres. Das Endstück 16 weist vorteilhaft die Gestalt einer Breitschlitzdüse 17 auf, die sich über etwa zwei Drittel der Breite des Auswurfkanals 9 erstrecken kann. Mittels der Verengung 16, 17 wird eine Beschleunigung des vom Gebläserad 6 geförderten Luftstromes, d.h. des zweiten Luftstromes, bewirkt. Dieser zweite, beschleunigte Luftstrom trifft auf die von dem ersten Luftstrom zur Auslaßöffnung 10 geförderten Mähgutabschnitte und bewirkt infolge der ihm innewohnenden Energie diesen Weitertransport bis in die entfernt gelegenen Ecken des Fangkorbes, wobei dieser prall gefüllt wird, wodurch sich ein hoher Füllungsgrad ergibt. Dies gilt besonders für träges und etwa durch Feuchtigkeit verklebtes Mähgut. Das Ende des gesonderten Luftführungskanals 15 kann etwa parallel zum Auswurfkanal 9 oder in einen nach unten gerichteten Schrägwinkel vorbestimmter Größe in den Auswurfkanal 9 eintreten.

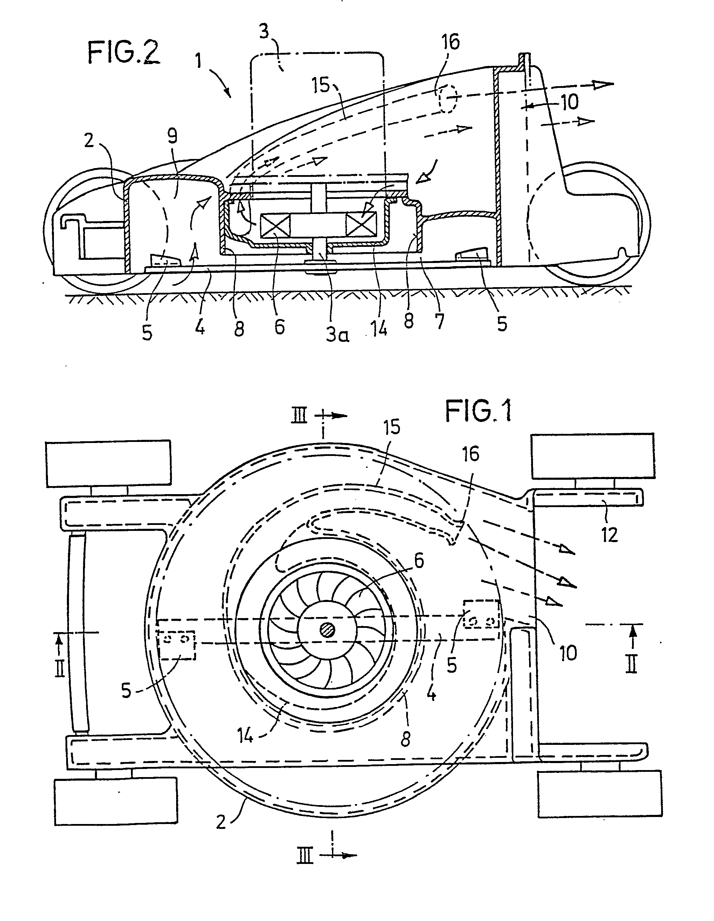

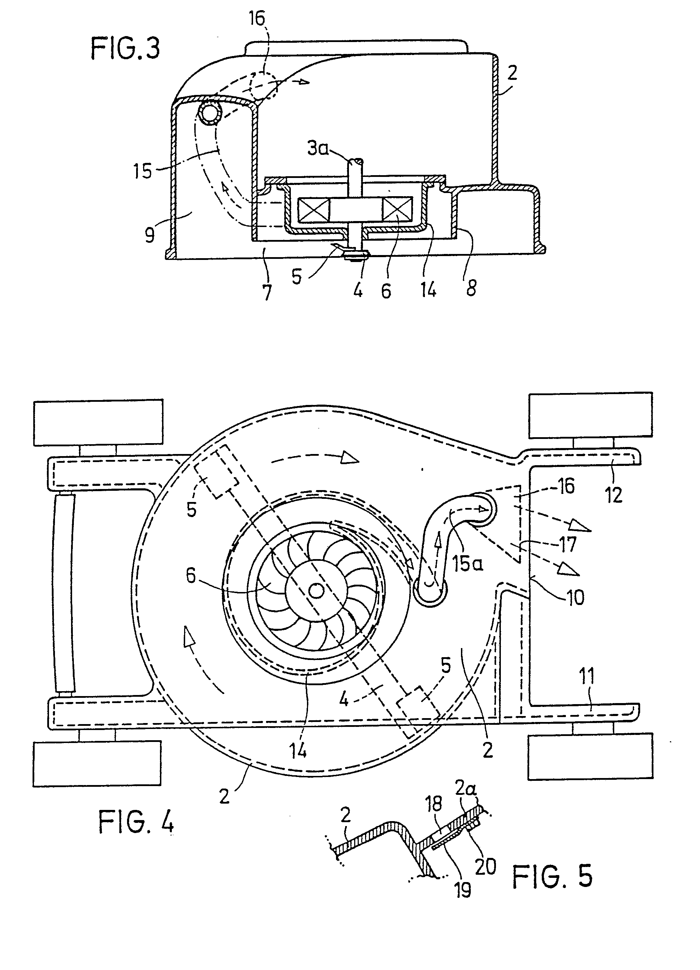

Bei der Ausführungsform der Fig. 1 bis 3 ist der an das Gebläserad 6 angeschlossene gesonderte Luftführungskanal 15 innerhalb des Schutzgehäuses 2, z.B. in dem Auswurfkanal 9, untergebracht. Der Luftstrom trifft jedoch erst kurz vor der Auslaßöffnung 10 des Gehäuses 2 mit dem ersten Luftstrom in dem Auswurfkanal 9 zusammen. Bei der Ausführungsform der Fig. 4 ist der gesonderte Luftführungskanal 15a von dem Behälter 14 durch die Wandung des Gehäuses 2 auf kurzem Wege herausgeführt. Die betreffende Rohrleitung 14a befindet sich außerhalb des Gehäuses 2, wobei von oben her das Endstück in Form einer Düse od.dgl. in die Auslaßöffnung 10 des Auswurfkanals oder kurz vor dieser in den Auswurfkanal mündet. Dadurch ergibt sich eine wesentliche bauliche Vereinfachung. Die verengte Austrittsöffnung des gesonderten Luftführungskanals 15 oder 15a soll in den oberen Teil der Auslaßöffnung 10 des Auswurfkanals eintreten, und zwar im oberen Drittel oder Viertel dieser Auslaßöffnung. Die Gestaltung des Rasenmähers mit der einen ersten Luftstrom erzeugenden Schneidvorrichtung und die Auslegung des Gebläses mit Düse sind zweckmäßig zu zueinander abgestimmt, daß der zweite Luftstrom zu dem ersten Luftstrom geschwindigkeitsmäßig vorzugsweise ein Verhältnis von 3 zu 1 bis 1 zu 1 hat. Der zweite Luftstrom wird von oben zugeführt und der erste Luftstrom von unten angesaugt.

Da bei niedriger Schnitthöhe, bei der die untere Kante des Gehäuses 2 verhältnismäßig dicht zur Erdbodenfläche liegt, die Ansaugung der Umgebungsluft zu dem Raum der Schneidvorrichtung mehr oder weniger gedrosselt sein kann, so daß sich ein Unterdruck bildet und die Grashalme durch den zu geringen Ansaugstrom nicht genügend aufgerichtet werden, was die Schnittleistung beeinträchtigt, ist vorgesehen, in der Wandung des Gehäuses selbsttätig sich öffnende Rückschlagventile anzuordnen, so daß für diesen Fall ein Luftzutritt für den die Schneidvorrichtung enthaltenden Raum auch von oben erfolgt. Als Rückschlagventile werden vorteilhaft Klappen- oder Lippenventile verwendet. In Fig. 5 ist in einem Ausschnitt die Anordnung solcher Ventile an dem Gehäuse 2 dargestellt. Das Gehäuse 2 weist zweckmäßig an einem waagerechten Wandteil 2a Luftansaugöffnungen 18 auf, die an der Unterseite durch eigenfedernde Plättchen aus Kunststoff od.dgl. geschlossen gehalten werden. Diese elastischen Plättchen liegen dichtend an den Ansaugöffnungen 18 an. Bei Entstehen eines Unterdruckes in dem die Schneidvorrichtung aufnehmenden Raum 9 öffnen sich die Plättchen 19 von selbst, so daß Zusatzluft von oben in den betreffenden Raum eintreten kann. Sobald genügend Ansaugluft von unten zur Verfügung steht, schließen die Klappenoder Lippenventile automatisch. Die Plättchen werden durch geeignete Befestigungsmittel 20 in der abdichtenden vorgespannten Lage gehalten.

Der Rasenmäher ist in üblicher Weise mit Laufrädern versehen, wobei der Schnitthöhe eingestellt werden kann. Zum Verschieben des Rasenmähers kann ein Handbügel vorgesehen sein.

Die beschriebenen Merkmale haben für Rasenmäher aller Art Gültigkeit, gleichgültig ob es sich um Rasenmäher für private Zwecke oder auch im gewerblichen Bereich handelt. Bei den sogenannten Großmaschinen von etwa 0,8 bis 2,0 m Schnittbreite besteht die Schneidvorrichtung auch aus zwei bis drei Messersichelmähern, wobei die Messer nebeneinander angeordnet sind. Auch kommen Rasenmäher zum Einsatz, bei denen mehrere Messer übereinander vorgesehen sind. Auch bei diesen Rasenmähern können die erfindungsgemäßen Merkmale angewendet werden.

**Patentansprüche**

1. Rasenmäher mit einem Gehäuse (2), einem Antriebsmotor (3), einer von dem Antriebsmotor angetriebenen, mit Windflügeln (5) o.dgl. versehenen Schneidvorrichtung (4, 5), einem zu einer Gehäuse-Auslaßöffnung (10) führenden Auswurfkanal (9) für das abgeschnittene Mähgut und einem an dem Auswurfkanal (9) angeschlossenen Gebläserad (6), dadurch gekennzeichnet, daß das Gebläserad (6) in einem zu dem die Schneidvorrichtung (4, 5) enthaltenden Raum (7) abgeschlossenen besonderen Gebläsegehäuse (14) angeordnet ist, und daß von diesem Gebläsegehäuse (14) ein gesonderter Luftführungskanal (15, 15a) abgeht, der nahe der Gehäuse-Auslaßöffnung (10) in den Auswurfkanal (9) für das Mähgut mündet.

2. Rasenmäher nach Anspruch 1, dadurch gekennzeichnet, daß der gesonderte Luftführungskanal (15) innerhalb des Rasenmähergehäuses (2) angeordnet ist.

3. Rasenmäher nach an sdpruch 1, dadurch gekennzeichnet, daß der gesonderte Luftführungskanal (15a) bis zur Mündung in den Auswurfkanal (9) nahe der Auslaßöffnung (10) außerhalb des Rasenmähergehäuses geführt ist.

4. Rasenmäher nach einem der Ansprüche 1 bis 3, dadurch gekennzeichnet, daß das Endstück (16) des gesonderten Luftführungskanals (15, 15a) am Eintritt in den Auswurfkanal (9) zur Beschleunigung des Luftstromes düsenförmig verengt, z.B. als Venturirohr, ausgebildet ist.

5. Rasenmäher nach einem der Ansprüche 1 bis 3, dadurch gekennzeichnet, daß das Endstück (16) des gesonderten Luftführungskanals (15, 15a) als Breitschlitzdüse (17) ausgebildet ist, und daß Breite und Höhe der Breit-schlitzdüse ein Verhältnis von 5 bis 15 zu 1 haben.

6. Rasenmäher nach einem der Ansprüche 1 bis 5, dadurch gekennzeichnet, daß das Endstück (16) des gesonderten Luftführungskanals etwa parallel zum Auswurfkanal (9) verläuft.

7. Rasenmäher nach einem der Ansprüche 1 bis 5, dadurch gekennzeichnet, daß das Endstück (16) des gesonderten Luftführungskanals (15, 15a) im Schrägwinkel in den Auswurfkanal (9) mündet.

8. Rasenmäher nach einem der Ansprüche 1 bis 7, dadurch gekennzeichnet, daß der Abstand der Düsenöffnung des Endstückes (16) des gesonderten Luftführungskanals (15, 15a) von der Auslaßöffnung (10) des Auswurfkanals (9) maximal etwa ein Drittel der Länge des Auswurfkanals (9) beträgt.

9. Rasenmäher nach einem der Ansprüche 1 bis 8, dadurch gekennzeichnet, daß das Gebläserad (6) und das Gebläsegehäuse (14) als Radialgebläse ausgebildet sind.

10. Rasenmäher nach einem der Ansprüche 1 bis 9, dadurch gekennzeichnet, daß der gesonderte Luftführungskanal (15, 15a) im oberen Drittel bis Viertel der Höhe der Gehäuseauslaßöffnung (10) in den Auswurfkanal (9) mündet.

11. Rasenmäher nach einem der Ansprüche 1 bis 10, dadurch gekennzeichnet, daß in der Wandung des Gehäuses (2) für den die Schneidvorrichtung (4, 5) enthaltenden Raum selbstöffnende Rückschlagventile (18, 19, 20) vorgesehen sind.

12. Rasenmäher nach Anspruch 11, dadurch gekennzeichnet, daß die Rückschlagventile als Klappen- oder Lippenventile (18, 19) ausgebildet sind.

13. Rasenmäher nach einem der Ansprüche 1 bis 12, dadurch gekennzeichnet, daß das Gebläserad (6) mit Gebläsegehäuse (14) zwischen dem Antriebsmotor (3) und der Schneidvorrichtung (4, 5) oder oberhalb des Antriebsmotors angeordnet ist, wobei Gebläserad und Schneidvorrichtung von derselben Welle (3a) angetrieben sind.

## Revendications

1. Tondeuse à gazon comportant un carter (2), un moteur d'entrainement (3), un dispositif de coupe (4, 5) mû par le moteur d'entrainement et pourvu d'ailettes à vent (5) ou analogues, et un canal d'éjection (9) de la matière de fauchage coupée conduisant à un orifice de sortie (10) du carter et une roue de ventilateur (6) raccordée au canal d'éjection, (9) caractérisée par le fait que la roue de ventilateur (6) est disposée dans un carter particulier (14) de ventilateur fermé par rapport à l'enceinte (7) contenant le dispositif de coupe (4, 5) et qu'à partir de ce carter (14) de ventilateur s'étend un canal de conduite d'air séparé (15, 15a) qui débouche dans le canal d'éjection (9) de la matière fauchée au voisinage de l'orifice de sortie (10) du carter de la tondeuse.

2. Tondeuse à gazon selon la revendication 1, caractérisée par le fait que le canal de conduite d'air séparé (15) est disposé à l'intérieur du carter (2) de la tondeuse.

3. Tondeuse à gazon selon la revendication 1, caractérisée par le fait que le canal de conduite d'air séparé (15a) s'étend à l'extérieur du carter de la tondeuse jusqu'à son aboutissement dans le canal d'éjection (9) au voisinage de l'orifice de sortie (10).

4. Tondeuse à gazon selon l'une des revendications 1 à 3, caractérisée par le fait que le tronçon d'extrémité (16) du canal de conduite d'air séparé, (15, 15a) à l'entrée dans le canal d'éjection (9) est agencé de façon à se rétrécir en forme de tuyère pour l'accélération du courant d'air, notamment en tant que tube de Venturi.

5. Tondeuse à gazon selon l'une des revendications 1 à 3, caractérisée par le fait que le tronçon d'extrémité (16) du canal de conduite d'air séparé (15, 15a) est agencé sous forme d'une tuyère à large fente (17) et que la largeur et la hauteur de la tuyère à large fente sont dans le rapport de 5 à 15 relativement à 1.

6. Tondeuse à gazon selon l'une des revendications 1 à 5, caractérisée par le fait que le tronçon d'extrémité (16) du canal de conduite d'air séparé s'étend sensiblement parallèlement au canal d'éjection (9).

7. Tondeuse à gazon selon l'une des revendications 1 à 5, caractérisée par le fait que le tronçon d'extrémité (16) du canal de conduite d'air séparé (15, 15a) débouche dans le canal d'éjection (9) suivant un angle.

8. Tondeuse à gazon selon l'une des revendications 1 à 7, caractérisée par le fait que la distance de l'orifice de tuyère du tronçon d'extrémité (16) du canal de conduite d'aire séparé (15, 15a) par rapport à l'orifice de sortie (10) du canal d'éjection (9) est au maximum d'environ 1/3 de la longueur du canal d'éjection (9).

9. Tondeuse à gazon selon l'une des revendications 1 à 8, caractérisée par le fait que la roue de ventilateur (6) et le carter (14) du ventilateur sont agencés en tant que ventilateur radial.

10. Tondeuse à gazon l'une des revendications 1 à 9, caractérisée par le fait que le canal de conduite d'air séparé (15, 15a) débouche dans le canal d'éjection (9) un niveau allant du tiers au quart supérieur de la hauteur de l'orifice de sortie (10) du carter de la tondeuse.

11. Tondeuse à gazon selon l'une quelconque des revendications 1 à 10, caractérisée par le fait que dans la paroi du carter (2) destinée à l'enceinte contenant le dispositif de coupe (4, 5) sont prévues des soupapes de retenues à ouverture automatique (18, 19, 20).

12. Tondeuse à gazon selon la revendication 11, caractérisée par le fait que les soupapes de retenue sont agencées en tant que clapets ou soupapes à lèvre (18, 19).

13. Tondeuse à gazon selon l'une des revendications 1 à 12, caractérisée par le fait que la roue de ventilateur (6) est disposée avec son carter (14) entre le moteur d'entrainement (3) et le dispositif de coupe (4, 5) ou au-dessus du moteur d'entrainement, ladite roue de ventilateur et ledit dispositif de coupe étant entrainés par le même arbre (3a).

## Claims

1. Lawn mower with a housing (2), a drive motor (3), a cutting apparatus (4, 5) driven by the drive motor and provided with air vanes (5) or the like, a discharge passage (9) for the cut mown material leading to a housing outlet opening (10), and a fan wheel (6) connected to the discharge passage (9), characterised in that the fan wheel (6) is arranged in a separate fan housing (14) that is closed against the space (7) containing the cutting apparatus (4, 5), and that leading off from this fan housing (14) is a separate air duct (15, 15a) that opens out near the housing outlet opening (10) into the discharge passage (9) for the mown material.

2. Lawn mower as claimed in claim 1, characterised in that the separate air duct (15) is arranged inside the lawn mower housing (2).

3. Lawn mower as claimed in claim 1, characterised in that the separate air duct (15a) is routed outside the lawn mower housing until the opening into the discharge passage (9) near the outlet opening (10).

4. Lawn mower as claimed in one of claims 1 to 3, characterised in that the end piece (16) of the separate air duct (15, 15a) is formed in a narrowed nozzle shape, e.g. as a venturi tube, at the entry to the discharge passage (9) in order to accelerate the air flow.

5. Lawn mower as claimed in one of claims 1 to 3, characterised in that the end piece (16) of the separate air duct (15, 15a) is formed as a fishtail nozzle (17) and that the width and height of the fishtail nozzle are in the proportion of between 5 and 15 to 1.

6. Lawn mower as claimed in one of claims 1 to 5, characterised in that the end piece (16) of the separate air duct runs approximately parallel to the discharge passage (9).

7. Lawn mower as claimed in one of claims 1 to 5, characterised in that the end piece (16) of the separate air duct (15, 15a) opens out at an oblique angle into the discharge passage (9).

8. Lawn mower as claimed in one of claims 1 to 7, characterised in that the distance of the nozzle opening of the end piece (16) of the separate air duct (15, 15a) from the outlet opening (10) of the discharge passage (9) is at most approximately one third of the length of the discharge passage (9).

9. Lawn mower as claimed in one of claims 1 to 8, characterised in that the fan wheel (6) and the fan housing (14) are formed as a radial fan.

10. Lawn mower as claimed in one of claims 1 to 9, characterised in that the separate air duct (15, 15a) opens out into the discharge passage (9) in the upper third to quarter of the height of the housing outlet opening (10).

11. Lawn mower as claimed in one of claims 1 to 10, characterised in that in the walls of the housing (2) for the space containing the cutting apparatus (4, 5) are provided self-opening non-return valves (18, 19, 20).

12. Lawn mower as claimed in claim 11, characterised in that the non-return valves are designed as flap or lip valves (18, 19).

13. Lawn mower as claimed in one of claims 1 to 12, characterised in that the fan wheel (6) with fan housing (14) is arranged between the drive motor (3) and the cutting apparatus (4, 5) or above the drive motor, the fan wheel and cutting apparatus being driven by the same shaft (3a).

FIG.2

FIG.1

**FIG.3**

**FIG. 4**

**FIG. 5**